# EUROPEAN PATENT SPECIFICATION

(11) **EP 3 648 250 B1**
(45) Date of publication and mention of the grant of the patent: **16.07.2025**
(21) Application number: 18823304.3
(22) Date of filing: 21.03.2018
(51) Int. Cl.: G02B 5/00, G02B 1/00, H01Q 15/00, B29C 69/00

(54) **METAMATERIAL AND MANUFACTURING METHOD THEREOF**
METAMATERIAL UND VERFAHREN ZUR HERSTELLUNG DAVON
MÉTAMATÉRIAU ET SON PROCÉDÉ DE FABRICATION

(30) Priority: 27.06.2017 CN 201710499174
(43) Date of publication of application: 06.05.2020
(73) Proprietor: Kuang-Chi Institute of Advanced Technology, Shenzhen, Guangdong 518057 (CN)
(72) Inventor: LIU, Ruopeng, Shenzhen Guangdong 518057 (CN); ZHAO, Zhiya, Shenzhen Guangdong 518057 (CN); ZHOU, Juehui, Shenzhen, Guangdong 518057 (CN); TANG, Xin, Shenzhen Guangdong 518057 (CN)
(74) Representative: Goddar, Heinz J.
(86) International application number: PCT/CN2018/079814
(87) International publication number: WO 2019/001031

(56) References cited:
- WO-A1-2013/103600
- WO-A2-2017/059866
- CN-A- 106 032 329
- CN-A- 106 207 480
- XIE YANGBO ET AL: "Microwave metamaterials made by fused deposition 3D printing of a highly conductive copper-based filament", APPLIED PHYSICS LETTERS, A I P PUBLISHING LLC, US, vol. 110, no. 18, 1 May 2017 (2017-05-01), XP012218489, ISSN: 0003-6951, [retrieved on 20170501], DOI: 10.1063/1.4982718
- GRAHN P ET AL: "Interferometric description of optical metamaterials", NEW JOURNAL OF PHYSICS, INSTITUTE OF PHYSICS PUBLISHING, BRISTOL, GB, vol. 15, no. 11, 21 November 2013 (2013-11-21), pages 113044, XP020252783, ISSN: 1367-2630, [retrieved on 20131121], DOI: 10.1088/1367-2630/15/11/113044

## Description

### Technical Field

The present disclosure relates to the electromagnetic communications field, and more specifically, to a metamaterial and a manufacturing method thereof.

### Background

A metamaterial is an artificial composite structural material that has a supernormal physical property that a natural material does not have. In the metamaterial, artificial microstructures are cyclically arranged to change a dielectric constant and a magnetic permeability µ of each point in space, so that the whole metamaterial has a dielectric constant and a magnetic permeability µ that are superior to those of a common material within a specific frequency range. A refractive index n is equal to a square-root of a product of the dielectric constant and the magnetic permeability µ. That is, a metamaterial whose refractive index is superior to that of a common material can be manufactured.

Currently, a multi-component microstructure is usually manufactured through a microstructure overprinting process. With reference to a metal microstructure etching technology, a microstructure silk-screen printing technology, a counterpoint technology, and the like, component microstructures of a metamaterial are manufactured on a same substrate in an overlay manner. In this method, because components are manufactured in series, a procedure is complex, and error ratios are multiplied and superimposed, a final microstructure yield rate is low. The counterpoint technology in the overprinting technology is very crucial. However, it is difficult to ensure precision of the technology after a counterpoint operation is performed for a plurality of times. In addition, in the overprinting technology, a single template (for example, a silkscreen) needs to be manufactured for each component, thereby causing relatively high metamaterial iteration costs and a long period. WO 2017/059866, XIE YANGBO ET AL: "Microwave metamaterials made by fused deposition 3D printing of a highly conductive copper-based filament", APPLIED PHYSICS LETTERS, A I P PUBLISHING LLC, US, vol. 110, no. 18, 1 May 2017 (2017-05-01); and GRAHN P ET AL: "Interferometric description of optical metamaterials",NEW JOURNAL OF PHYSICS, INSTITUTE OF PHYSICS PUBLISHING, BRISTOL, GB, vol. 15, no. 11, 21 November 2013 (2013-11-21), page 113044 disclose various 3D printing techniques, metamaterial structures and investigations.

### Summary

For prior-art disadvantages of a complex metamaterial preparation process and high costs, the present disclosure is intended to provide a new metamaterial manufacturing process of multi-component one-off molding and sintering.

According to an aspect of the present disclosure, a metamaterial manufacturing method is provided, including the following steps: (a) separately adding insulating substrate powder and at least one of wave-absorbing agent powder and metal electrode powder to thermoplastic resin, and mixing them evenly to obtain a raw material; (b) applying a coextrusion process to the raw material according to a metamaterial microstructure design, to form a microstructure unit rodlike material; and (c) configuring the microstructure unit rodlike material in a cyclic microstructure configuration manner, placing the material in an extruder, and obtaining a cyclically configured metamaterial microstructure through coextrusion by using the extruder.

In the manufacturing method, after step (c), the manufacturing method further includes the following step: (d) repeating step (c) to perform coextrusion for a plurality of times, until a design-required metamaterial microstructure size is obtained.

In the manufacturing method, after step (d), the manufacturing method further includes the following steps: (e1) obtaining, through cutting by using a wire cutting apparatus, metamaterial microstructure sheets in required thickness, and splicing the metamaterial microstructure sheets through mold pressing, isostatic pressing, bonding, or the like, to obtain an impedance matching metamaterial biscuit; and (f1) placing the impedance matching metamaterial biscuit in a sintering furnace for adhesive discharge and sintering, to complete manufacturing of a ceramic-substrate metamaterial.

In the manufacturing method, after step (d), the manufacturing method further includes the following steps: (e2) obtaining, through cutting by using a laser cutting apparatus, metamaterial microstructure sheets in required thickness, and laying the metamaterial microstructure sheets on a cambered mold through mold pressing, vacuum bag pressing, or the like, to form a cambered conformal metamaterial biscuit; and (f2) placing the corresponding cambered conformal metamaterial biscuit in a sintering furnace for adhesive discharge and sintering, to complete manufacturing of a cambered ceramic-substrate metamaterial tile.

In the manufacturing method, after step (d), the manufacturing method further includes the following step: (e3) obtaining, through cutting by using a wire cutting apparatus, metamaterial microstructure sheets in required thickness, to form an efficient metamaterial wave-absorbing part.

In the manufacturing method, the wave-absorbing agent powder includes one of or a combination of carbon fiber powder, silicon carbide fiber powder, or polycrystalline iron fiber powder.

In the manufacturing method, the metal electrode powder includes one of or a combination of titanium, vanadium, chromium, zirconium, niobium, molybdenum, hafnium, tantalum, or tungsten powder.

In the manufacturing method, the insulating substrate powder includes one of or a combination of polyimide, polyester, polyurethane, epoxy resin, or polymethyl methacrylate powder.

In the manufacturing method, the thermoplastic resin includes one of or a combination of polyethylene, polypropylene, polyvinyl chloride, polystyrene, polymethyl methacrylate, polyester, polyformaldehyde, polyamide, polyphenylether, vinylidene chloride, nikasol, polyvinyl alcohol, polyvinyl acetal, AS resin, ABS resin, acryl resin, fluororesin, nylon resin, polyacetal resin, or panlite.

In the manufacturing method, the manufacturing method includes: performing cyclic microstructure configuration on the microstructure unit rodlike material according to 4 × 4 or 5 × 5.

In the manufacturing method, a ratio of a mass sum of the wave-absorbing agent powder, the metal electrode powder, and the insulating substrate powder to mass of the thermoplastic resin is 0.1 to 0.5.

In the manufacturing method, the ratio of the mass sum of the wave-absorbing agent powder, the metal electrode powder, and the insulating substrate powder to the mass of the thermoplastic resin is 0.3 to 0.4.

In the manufacturing method, a ratio of a mass sum of the wave-absorbing agent powder and the metal electrode powder to the insulating substrate powder is 1:4 to 4:1.

According to another aspect of the present disclosure, a metamaterial manufactured according to the manufacturing method is further provided.

With development of metamaterial technologies, addition of a multi-component functional material provides broader space for metamaterial design. For example, materials with different impedance facilitate impedance matching of a metamaterial. A conjunction of a conventional wave-absorbing material and a wave-absorbing metamaterial can help obtain a lighter, thinner, and more efficient wave-absorbing metamaterial. The present disclosure overcomes process difficulties, such as a low yield rate and relatively low iteration efficiency, in a multi-component metamaterial manufacturing process are overcome, and provides a new ceramic metamaterial manufacturing process of multi-component one-off molding and sintering.

The present disclosure may be applied to processing and manufacturing of an impedance matching structure of a ceramic-substrate multi-impedance metamaterial, a wave-absorbing metamaterial, and an axially continuous metamaterial, and can provide related fields with a metamaterial manufacturing process that features convenient iteration, a short period, integrated molding, and a low yield rate.

The present disclosure provides a metamaterial manufacturing method that features high efficiency, low iteration costs, and a relatively high yield rate. Benefits are achieved through a coextrusion process.

### Detailed Description of the Drawings

FIG. 1 is a flowchart of manufacturing a metamaterial according to some embodiments of the present disclosure; and
FIG. 2 is a flowchart of manufacturing a metamaterial according to some other embodiments of the present disclosure.

### Detailed Description of the Embodiments

The following clearly and completely describes the technical solutions in the embodiments of the present disclosure with reference to the accompanying drawings in the embodiments of the present disclosure. Apparently, the described embodiments are merely some but not all of the embodiments of the present disclosure. All other embodiments obtained by a person of ordinary skill in the art based on the embodiments of the present disclosure shall fall within the protection scope of the present disclosure.

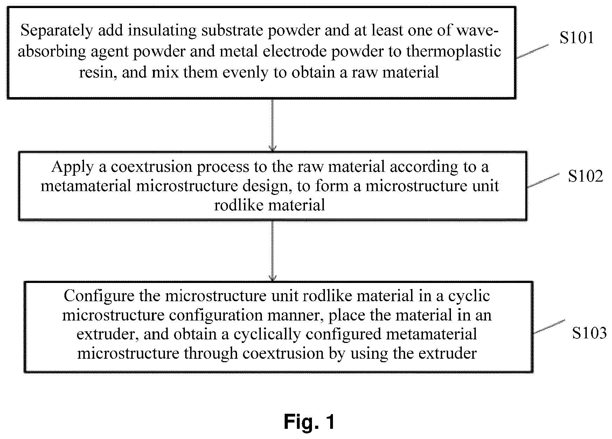

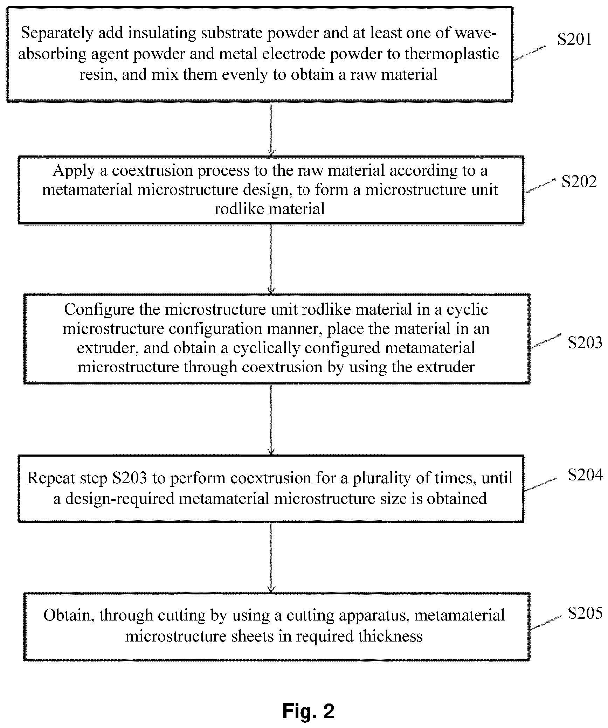

A metamaterial manufacturing method provided in the present disclosure includes the following steps:
As shown in step S101 in FIG. 1 and step S201 in FIG. 2, separately add insulating substrate powder and at least one of wave-absorbing agent powder and metal electrode powder to thermoplastic resin, and mix them evenly to obtain a raw material. The wave-absorbing agent powder includes one of or a combination of carbon fiber powder, silicon carbide fiber powder, or polycrystalline iron fiber powder. The metal electrode powder includes one of or a combination of titanium, vanadium, chromium, zirconium, niobium, molybdenum, hafnium, tantalum, or tungsten powder. The insulating substrate powder includes one of or a combination of polyimide, polyester, polyurethane, epoxy resin, or polymethyl methacrylate powder. The thermoplastic resin includes one of or a combination of polyethylene, polypropylene, polyvinyl chloride, polystyrene, polymethyl methacrylate, polyester, polyformaldehyde, polyamide, polyphenylether, vinylidene chloride, nikasol, polyvinyl alcohol, polyvinyl acetal, AS resin, ABS resin, acryl resin, fluororesin, nylon resin, polyacetal resin, or panlite. In this step, a ratio of a mass sum of the wave-absorbing agent powder, the metal electrode powder, and the insulating substrate powder to mass of the thermoplastic resin is 0.1 to 0.5, however, the invention has a ratio of 0.3 to 0.4, and a ratio of a mass sum of the wave-absorbing agent powder and the metal electrode powder to the insulating substrate powder is 1:4 to 4:1.

Next, as shown in step S102 in FIG. 1 and step S202 in FIG. 2, apply a coextrusion process to the raw material according to a metamaterial microstructure design, to form a microstructure unit rodlike material.

Next, as shown in step S103 in FIG. 1 and step S203 in FIG. 2, configure the microstructure unit rodlike material in a cyclic microstructure configuration manner, place the material in an extruder, and obtain a cyclically configured metamaterial microstructure through coextrusion by using the extruder.

Next, as shown in step S204 in FIG. 2, repeat step S203 to perform coextrusion for a plurality of times, until a design-required metamaterial microstructure size is obtained.

Next, a manufacturing process further includes step S205 in FIG. 2: Obtain, through cutting by using a wire cutting apparatus, metamaterial microstructure sheets in required thickness, and perform subsequent processing on the metamaterial microstructure sheets to manufacture an impedance matching metamaterial biscuit, a ceramic-substrate metamaterial, a cambered conformal metamaterial biscuit, a cambered ceramic-substrate metamaterial tile, an efficient wave-absorbing part, and the like.

illustrative example 1, not according to the invention:
Manufacture a resin-substrate impedance matching metamaterial.
1. Separately add carbon fiber powder, tungsten powder, and epoxy resin powder to polyethylene resin, and mix them evenly to make them have similar rheological properties, to obtain a raw material, where a ratio of a mass sum of the carbon fiber powder, the tungsten powder, and the epoxy resin powder to mass of the polyethylene resin is 0.28, a ratio of a mass sum of the carbon fiber powder and the tungsten powder to the epoxy resin powder is 1:4, and a mass ratio of the carbon fiber powder to the tungsten powder is 1:3.
2. According to a metamaterial microstructure design, add the raw material to a mold, and apply a coextrusion process to form a microstructure unit rodlike material with a clear interface.
3. Place several (4 × 4, 5 × 5, or the like) microstructure unit rodlike materials in an extruder, where the materials are configured in a designed cyclic microstructure configuration manner. Obtain a cyclically configured metamaterial microstructure through coextrusion by using the extruder.
4. Repeat step 3 to perform coextrusion for a plurality of times, until a design-required metamaterial microstructure size is obtained.
5. Obtain, through cutting by using a wire cutting apparatus, metamaterial microstructure sheets in required thickness, and splice the metamaterial microstructure sheets through mold pressing, isostatic pressing, bonding, or the like, to obtain an impedance matching metamaterial sample.

A yield rate of the impedance matching metamaterial sample tested by using a plate reflectivity method is 87%.

Embodiment 2: Manufacture a cambered resin-substrate impedance matching metamaterial.
1. Separately add silicon carbide fiber powder, titanium powder, and polyimide powder to polymethyl methacrylate resin, and mix them evenly to make them have similar rheological properties, to obtain a raw material, where a ratio of a mass sum of the silicon carbide fiber powder, the titanium powder, and the polyimide powder to mass of the polymethyl methacrylate resin is 0.36, a ratio of a mass sum of the silicon carbide fiber powder and the titanium powder to the polyimide powder is 4:1, and a mass ratio of the silicon carbide fiber powder to the titanium powder is 1:4.
2. According to a metamaterial microstructure design, add the raw material to a mold, and apply a coextrusion process to form a microstructure unit rodlike material with a clear interface.
3. Place several (4 × 4, 5 × 5, or the like) microstructure unit rodlike materials in an extruder, where the materials are configured in a designed cyclic microstructure configuration manner. Obtain a cyclically configured metamaterial microstructure through coextrusion by using the extruder.
4. Repeat step 3 to perform coextrusion for a plurality of times, until a design-required metamaterial microstructure size is obtained.
5. Obtain, through cutting by using a laser cutting apparatus, metamaterial microstructure sheets in required thickness, and lay the sheets on a cambered mold through mold pressing, vacuum bag pressing, or the like, to form a cambered conformal resin-substrate metamaterial.

A yield rate of the resin-substrate metamaterial tested by using a near-field test method is 95%.

Embodiment 3: Manufacture an efficient resin-substrate wave-absorbing metamaterial.
1. Separately add polycrystalline iron fiber powder and polymethyl methacrylate powder to polyvinyl chloride resin, and mix them evenly to make them have similar rheological properties, to obtain a raw material, where a ratio of a mass sum of the polycrystalline iron fiber powder and the polymethyl methacrylate powder to the polyvinyl chloride resin is 0.33, and a mass ratio of the polycrystalline iron fiber powder to the polymethyl methacrylate powder is 1:1.
2. According to a metamaterial microstructure design, add the raw material to a mold, and apply a coextrusion process to form a microstructure unit rodlike material with a clear interface.
3. Place several (4 × 4, 5 × 5, or the like) microstructure unit rodlike materials in an extruder, where the materials are configured in a designed cyclic microstructure configuration manner. Obtain a cyclically configured metamaterial microstructure through coextrusion by using the extruder.
4. Repeat step 3 to perform coextrusion for a plurality of times, until a design-required metamaterial microstructure size is obtained.
5. Obtain, through cutting by using a wire cutting apparatus, metamaterial microstructure sheets in required thickness, to form an efficient metamaterial wave-absorbing part.

A yield rate of the efficient metamaterial wave-absorbing part tested by using a plate reflectivity method is 90%.

Embodiment 4: Manufacture a ceramic-substrate impedance matching metamaterial.
1. Separately add zirconium powder and polymethyl methacrylate powder to polyvinyl chloride resin, and mix them evenly to make them have similar rheological properties, to obtain a raw material, where a ratio of a mass sum of the zirconium powder and the polymethyl methacrylate powder to the polyvinyl chloride resin is 0.31, and a mass ratio of the zirconium powder to the polymethyl methacrylate powder is 3:1.
2. According to a metamaterial microstructure design, add the raw material to a mold, and apply a coextrusion process to form a microstructure unit rodlike material with a clear interface.
3. Place several (4 × 4, 5 × 5, or the like) microstructure unit rodlike materials in an extruder, where the materials are configured in a designed cyclic microstructure configuration manner. Obtain a cyclically configured metamaterial microstructure through coextrusion by using the extruder.
4. Repeat step 3 to perform coextrusion for a plurality of times, until a design-required metamaterial microstructure size is obtained.
5. Obtain, through cutting by using a wire cutting apparatus, metamaterial microstructure sheets in required thickness, and splice the metamaterial microstructure sheets through mold pressing, isostatic pressing, bonding, or the like, to obtain an impedance matching metamaterial biscuit.
6. Place the biscuit in a sintering furnace to perform an adhesive discharge and sintering process, to complete manufacturing of a ceramic-substrate metamaterial.

A yield rate of the ceramic-substrate metamaterial tested by using a plate reflectivity method is 84%.

Embodiment 5: Manufacture a cambered ceramic-substrate impedance matching metamaterial.
1. Separately add silicon carbide fiber powder, tantalum powder, and epoxy resin powder to ABS resin, and mix them evenly to make them have similar rheological properties, to obtain a raw material, where a ratio of a mass sum of the silicon carbide fiber powder, the tantalum powder, and the epoxy resin powder to mass of the ABS resin is 0.39, a ratio of a mass sum of the silicon carbide fiber powder and the tantalum powder to the epoxy resin powder is 4:1, and a mass ratio of the silicon carbide fiber powder to the tantalum powder is 1:2.
2. According to a metamaterial microstructure design, add the raw material to a mold, and apply a coextrusion process to form a microstructure unit rodlike material with a clear interface.
3. Place several (4 × 4, 5 × 5, or the like) microstructure unit rodlike materials in an extruder, where the materials are configured in a designed cyclic microstructure configuration manner. Obtain a cyclically configured metamaterial microstructure through coextrusion by using the extruder.
4. Repeat step 3 to perform coextrusion for a plurality of times, until a design-required metamaterial microstructure size is obtained.
5. Obtain, through cutting by using a laser cutting apparatus, metamaterial microstructure sheets in required thickness, and lay the sheets on a cambered mold through mold pressing, vacuum bag pressing, or the like, to form a cambered conformal metamaterial biscuit.
6. Place the corresponding cambered biscuit in a sintering furnace for adhesive discharge and sintering, to complete manufacturing of a cambered ceramic-substrate metamaterial tile.

A yield rate of the cambered ceramic-substrate metamaterial tile tested by using a near-field reflectivity method is 90%.

In the present disclosure, a polymer coextrusion process is combined with a metamaterial technology, to provide a method for manufacturing a ceramic-substrate metamaterial that features high efficiency, low iteration costs, and a relatively high yield rate. A thinner and more efficient wave-absorbing metamaterial is obtained through a coextrusion-cofiring process. The present disclosure may be applied to processing and manufacturing of an impedance matching structure of a ceramic-substrate multi-impedance metamaterial, a wave-absorbing metamaterial, and an axially continuous metamaterial, and can provide related fields with a metamaterial manufacturing process that features convenient iteration, a short period, integrated molding, and a low yield rate.

The foregoing are merely preferred embodiments of the present disclosure, but are not intended to limit the present disclosure. The invention is defined by the accompanying claims.

## Claims

1. A metamaterial manufacturing method, the manufacturing method comprises the following steps:
(a) separately adding insulating substrate powder and at least one of wave absorbing agent powder and metal electrode powder to thermoplastic resin, and mixing them evenly to obtain a raw material;
(b) applying a coextrusion process to the raw material according to a metamaterial microstructure design, to form a microstructure unit rodlike material; and
(c) configuring the microstructure unit rodlike material in a cyclic microstructure configuration manner, placing the material in an extruder, and obtaining a cyclically configured metamaterial microstructure through coextrusion by using the extruder;
a ratio of a mass sum of the absorbent powder, the metal electrode powder, and the insulating substrate powder to mass of the thermoplastic resin is 0.3 to 0.4;
a ratio of a mass sum of the absorbent powder and the metal electrode powder to the insulating substrate powder is 1:4 to 4:1.

2. The manufacturing method as claimed in claim 1, wherein after step (c), the manufacturing method further comprises the following step:
(d) repeating step (c) to perform coextrusion for a plurality of times, until a design-required metamaterial microstructure size is obtained.

3. The manufacturing method as claimed in claim 2, wherein after step (d), the manufacturing method further comprises the following steps:
(e1) obtaining, through cutting by using a wire cutting apparatus, metamaterial microstructure sheets in required thickness, and splicing the metamaterial microstructure sheets through mold pressing, isostatic pressing, bonding, or the like, to obtain an impedance matching metamaterial biscuit; and
(f1) placing the impedance matching metamaterial biscuit in a sintering furnace for adhesive discharge and sintering, to complete manufacturing of a ceramic-substrate metamaterial.

4. The manufacturing method as claimed in claim 2, wherein after step (d), the manufacturing method further comprises the following steps:
(e2) obtaining, through cutting by using a laser cutting apparatus, metamaterial microstructure sheets in required thickness, and laying the metamaterial microstructure sheets on a cambered mold through mold pressing, vacuum bag pressing, or the like, to form a cambered conformal metamaterial biscuit; and
(f2) placing the corresponding cambered conformal metamaterial biscuit in a sintering furnace for adhesive discharge and sintering, to complete manufacturing of a cambered ceramic-substrate metamaterial tile.

5. The manufacturing method as claimed in claim 2, wherein after step (d), the manufacturing method further comprises the following step:
(e3) obtaining, through cutting by using a wire cutting apparatus, metamaterial microstructure sheets in required thickness, to form an efficient metamaterial wave-absorbing part.

6. The manufacturing method as claimed in claim 1, wherein the wave absorbing agent powder comprises one of or a combination of carbon fiber powder, silicon carbide fiber powder, or polycrystalline iron fiber powder.

7. The manufacturing method as claimed in claim 1, wherein the metal electrode powder comprises one of or a combination of titanium, vanadium, chromium, zirconium, niobium, molybdenum, hafnium, tantalum, or tungsten powder.

8. The manufacturing method as claimed in claim 1, wherein the insulating substrate powder comprises one of or a combination of polyimide, polyester, polyurethane, epoxy resin, or polymethyl methacrylate powder.

9. The manufacturing method as claimed in claim 1, wherein the thermoplastic resin comprises one of or a combination of polyethylene, polypropylene, polyvinyl chloride, polystyrene, polymethyl methacrylate, polyester, polyformaldehyde, polyamide, polyphenylether, vinylidene chloride, nikasol, polyvinyl alcohol, polyvinyl acetal, AS resin, ABS resin, acryl resin, fluororesin, nylon resin, polyacetal resin, or panlite.

10. The manufacturing method as claimed in claim 1, wherein the manufacturing method comprises: performing cyclic microstructure configuration on the microstructure unit rodlike material as in a 4 by 4 or 5 by 5 microstructure unit configuration.

11. 4-2- A metamaterial manufactured as claimed in the manufacturing method as claimed in claim 1.

12. The metamaterial manufacturing method as claimed in claim 1, wherein after step (c), the manufacturing method further comprises the following step:
(d) repeating step (c) to perform coextrusion for a plurality of times, until a design-required metamaterial microstructure size is obtained.

## Patentansprüche

1. Verfahren zur Herstellung von Metamaterial, wobei das Herstellungsverfahren die folgenden Schritte umfasst:
(a) separates Zugeben von isolierendem Substratpulver und mindestens einem von Wellenabsorptionsmittelpulver und Metallelektrodenpulver zu thermoplastischem Harz und gleichmäßiges Mischen derselben, um ein Rohmaterial zu erhalten;
(b) Anwenden eines Koextrusionsverfahrens auf das Rohmaterial gemäß einem Metamaterial-Mikrostrukturentwurf, um ein stabartiges Mikrostruktureinheitsmaterial zu bilden; und
(c) Konfigurieren des stabartigen Mikrostruktureinheitsmaterials in einer zyklischen Mikrostrukturkonfigurationsweise, Platzieren des Materials in einem Extruder und Erhalten einer zyklisch konfigurierten Metamaterial-Mikrostruktur durch Koextrusion unter Verwendung des Extruders;
wobei ein Verhältnis einer Massensumme des Absorptionspulvers, des Metallelektrodenpulvers und des isolierenden Substratpulvers zu der Masse des thermoplastischen Harzes 0,3 bis 0,4 beträgt;
wobei ein Verhältnis einer Massensumme des Absorptionspulvers und des Metallelektrodenpulvers zu dem isolierenden Substratpulver 1:4 bis 4:1 beträgt.

2. Herstellungsverfahren nach Anspruch 1, wobei nach Schritt (c) das Herstellungsverfahren ferner den folgenden Schritt umfasst:
(d) Wiederholen von Schritt (c), um eine Koextrusion mehrere Male durchzuführen, bis eine entwurfserforderliche Metamaterial-Mikrostrukturgröße erhalten wird.

3. Herstellungsverfahren nach Anspruch 2, wobei nach Schritt (d) das Herstellungsverfahren ferner die folgenden Schritte umfasst:
(e1) Erhalten, durch Schneiden unter Verwendung einer Drahtschneidevorrichtung, von Metamaterial-Mikrostrukturtafeln in erforderlicher Dicke und Spleißen der Metamaterial-Mikrostrukturtafeln durch Formpressen, isostatisches Pressen, Bonden oder dergleichen, um einen Impedanzanpassungs-Metamaterial-Biskuit zu erhalten; und
(f1) Platzieren des Impedanzanpassungs-Metamaterial-Biskuits in einem Sinterofen zur Klebstoffentladung und Sinterung, um die Herstellung eines Keramiksubstrat-Metamaterials abzuschließen.

4. Herstellungsverfahren nach Anspruch 2, wobei nach Schritt (d) das Herstellungsverfahren ferner die folgenden Schritte umfasst:
(e2) Erhalten, durch Schneiden unter Verwendung einer Laserschneidevorrichtung, von Metamaterial-Mikrostrukturtafeln in erforderlicher Dicke und Legen der Metamaterial-Mikrostrukturtafeln auf eine gewölbte Form durch Formpressen, Vakuumbeutelpressen oder dergleichen, um einen gewölbten konformen Metamaterial-Biskuit zu bilden; und
(f2) Platzieren des entsprechenden gewölbten konformen Metamaterial-Biskuits in einem Sinterofen zur Klebstoffentladung und Sinterung, um die Herstellung einer gewölbten Keramiksubstrat-Metamaterialfliese abzuschließen.

5. Herstellungsverfahren nach Anspruch 2, wobei nach Schritt (d) das Herstellungsverfahren ferner den folgenden Schritt umfasst:
(e3) Erhalten, durch Schneiden unter Verwendung einer Drahtschneidevorrichtung, von Metamaterial-Mikrostrukturtafeln in erforderlicher Dicke, um einen effizienten metamaterialwellenabsorbierenden Teil zu bilden.

6. Herstellungsverfahren nach Anspruch 1, wobei das Wellenabsorptionsmittelpulver eines von oder eine Kombination aus Kohlenstofffaserpulver, Siliciumcarbidfaserpulver oder polykristallinem Eisenfaserpulver umfasst.

7. Herstellungsverfahren nach Anspruch 1, wobei das Metallelektrodenpulver eines von oder eine Kombination aus Titan-, Vanadium-, Chrom-, Zirkonium-, Niob-, Molybdän-, Hafnium-, Tantal- oder Wolframpulver umfasst.

8. Herstellungsverfahren nach Anspruch 1, wobei das isolierende Substratpulver eines von oder eine Kombination aus Polyimid-, Polyester-, Polyurethan-, Epoxidharz- oder Polymethylmethacrylatpulver umfasst.

9. Herstellungsverfahren nach Anspruch 1, wobei das thermoplastische Harz eines von oder eine Kombination aus Polyethylen, Polypropylen, Polyvinylchlorid, Polystyrol, Polymethylmethacrylat, Polyester, Polyformaldehyd, Polyamid, Polyphenylether, Vinylidenchlorid, Nikasol, Polyvinylalkohol, Polyvinylacetal, AS-Harz, ABS-Harz, Acrylharz, Fluorharz, Nylonharz, Polyacetalharz oder Panlith umfasst.

10. Herstellungsverfahren nach Anspruch 1, wobei das Herstellungsverfahren Folgendes umfasst: Durchführen einer zyklischen Mikrostrukturkonfiguration an dem stabartigen Mikrostruktureinheitsmaterial gemäß einer 4-mal-4- oder 5-mal-5-Mikrostruktureinheitskonfiguration.

11. Metamaterial, hergestellt gemäß dem Herstellungsverfahren nach Anspruch 1.

12. Verfahren zur Herstellung von Metamaterial nach Anspruch 1, wobei nach Schritt (c) das Herstellungsverfahren ferner den folgenden Schritt umfasst:
(d) Wiederholen von Schritt (c), um eine Koextrusion mehrere Male durchzuführen, bis eine entwurfserforderliche Metamaterial-Mikrostrukturgröße erhalten wird.

## Revendications

1. Procédé de fabrication d'un métamatériau, le procédé de fabrication comprend les étapes suivantes :
(a) l'ajout séparé d'une poudre de substrat isolant et au moins soit une poudre d'agent absorbant les ondes, soit une poudre d'électrode métallique, à une résine thermoplastique, et leur mélangeage uniforme pour obtenir un matériau brut ;
(b) l'application d'un processus de coextrusion au matériau brut selon une conception de microstructure de métamatériau, pour former un matériau de type tige d'unité de microstructure ; et
(c) la configuration du matériau de type tige d'unité de microstructure dans une manière de configuration de microstructure cyclique, le placement du matériau dans une extrudeuse et l'obtention d'une microstructure de métamatériau configurée cycliquement par coextrusion en utilisant l'extrudeuse ;
un rapport d'une masse totale de la poudre absorbante, de la poudre d'électrode métallique et de la poudre de substrat isolant à la masse de la résine thermoplastique est de 0,3 à 0,4 ;
un rapport d'une masse totale de la poudre absorbante et de la poudre d'électrode métallique à la poudre de substrat isolant est de 1:4 à 4:1.

2. Procédé de fabrication selon la revendication 1, dans lequel après l'étape (c), le procédé de fabrication comprend en outre l'étape suivante :
(d) la répétition de l'étape (c) pour effectuer une coextrusion une pluralité de fois, jusqu'à ce qu'une dimension de microstructure de métamatériau requise par la conception soit obtenue.

3. Procédé de fabrication selon la revendication 2, dans lequel après l'étape (d), le procédé de fabrication comprend en outre les étapes suivantes :
(e1) l'obtention, par découpage en utilisant un appareil de découpe à fil, de feuilles de microstructure de métamatériau dans l'épaisseur requise, et l'épissage des feuilles de microstructure de métamatériau par pressage en moule, pressage isostatique, collage, ou similaire, pour obtenir un biscuit de métamatériau d'adaptation d'impédance ; et
(f1) le placement du biscuit de métamatériau d'adaptation d'impédance dans un four de frittage pour une décharge d'adhésif et le frittage, pour terminer la fabrication d'un métamatériau de substrat céramique.

4. Procédé de fabrication selon la revendication 2, dans lequel après l'étape (d), le procédé de fabrication comprend en outre les étapes suivantes :
(e2) l'obtention, par découpage en utilisant un appareil de découpe au laser, de feuilles de microstructure de métamatériau de l'épaisseur requise, et la pose des feuilles de microstructure de métamatériau sur un moule bombé par pressage en moule, pressage de sac sous vide, ou similaire, pour former un biscuit de métamatériau conforme bombé ; et
(f2) le placement du biscuit de métamatériau conforme bombé correspondant dans un four de frittage pour une décharge d'adhésif et le frittage, pour terminer la fabrication d'un carreau de métamatériau de substrat céramique bombé.

5. Procédé de fabrication selon la revendication 2, dans lequel après l'étape (d), le procédé de fabrication comprend en outre l'étape suivante :
(e3) l'obtention, par découpage en utilisant un appareil de découpe à fil, de feuilles de microstructure de métamatériau de l'épaisseur requise, pour former une partie d'absorption d'onde de métamatériau efficace.

6. Procédé de fabrication selon la revendication 1, dans lequel la poudre d'agent absorbant les ondes comprend une poudre ou une combinaison de poudre de fibre de carbone, poudre de fibre de carbure de silicium ou poudre de fibre de fer polycristalline.

7. Procédé de fabrication selon la revendication 1, dans lequel la poudre d'électrode métallique comprend soit une, soit une combinaison de poudre de titane, vanadium, chrome, zirconium, niobium, molybdène, hafnium, tantale ou tungstène.

8. Procédé de fabrication selon la revendication 1, dans lequel la poudre de substrat isolant comprend soit une poudre, soit une combinaison de poudre de polyimide, polyester, polyuréthane, résine époxy ou méthacrylate de polyméthyle.

9. Procédé de fabrication selon la revendication 1, dans lequel la résine thermoplastique comprend soit un élément, soit une combinaison de polyéthylène, polypropylène, chlorure de polyvinyle, polystyrène, méthacrylate de polyméthyle, polyester, polyformaldéhyde, polyamide, polyphényléther, chlorure de vinylidène, nikasol, alcool polyvinylique, acétal polyvinylique, résine AS, résine ABS, résine acrylique, fluororésine, résine de nylon, résine de polyacétal ou panlite.

10. Procédé de fabrication selon la revendication 1, dans lequel le procédé de fabrication comprend : la réalisation d'une configuration de microstructure cyclique sur le matériau de type tige d'unité de microstructure comme dans une configuration d'unité de de microstructure de 4 par 4 ou de 5 par 5.

11. Métamatériau fabriqué selon le procédé de fabrication selon la revendication 1.

12. Procédé de fabrication d'un métamatériau selon la revendication 1, dans lequel après l'étape (c), le procédé de fabrication comprend en outre l'étape suivante :
(d) la répétition de l'étape (c) pour effectuer une coextrusion une pluralité de fois, jusqu'à ce qu'une dimension de microstructure de métamatériau requise par la conception soit obtenue.
